# EUROPEAN PATENT APPLICATION

(11) **EP 2 023 334 A2**
(43) Date of publication of application: **11.02.2009**
(21) Application number: 08161027.1
(22) Date of filing: 23.07.2008
(51) Int. Cl.: G09G 5/02, G06F 3/048

(54) **Apparatus and method for determining coordinates of icon on display screen of mobile communication terminal**

(30) Priority: 31.07.2007 KR 20070077198
(71) Applicant: Samsung Electronics Co., Ltd., Suwon-si, Gyeonggi-Do (KR)
(72) Inventor: Kim, Suk-Soon, Yeongtong-gu, Suwon-si, Gyeonggi-do (KR); Yoo, Min-Ju, Yeongtong-gu, Suwon-si, Gyeonggi-do (KR)
(74) Representative: Harrison Goddard Foote

(57) **Abstract**

Provided is an apparatus and a method for determining coordinates of an icon on a display screen of a mobile communication terminal. The apparatus includes a display unit displaying the icon selection screen including the at least one icon and icon regions including icons; a focusing determination unit determining a background color of the icon selection screen, comparing the current hue value for each pixel with a previous hue value for each pixel pre-stored, determining a focus color and a focus region of a focused icon region, and calculating center coordinates of the determined focus region; and a control unit judging whether a difference between the current hue value and the previous hue value is 0, and determining the pixels having a comparison result other than 0 as the pixels having the changed hue values.

## Description

### BACKGROUND OF THE INVENTION

### 1. Field of the Invention

The present invention relates to an apparatus and a method for determining coordinates of an icon on a display screen of a mobile communication terminal, and more particularly to an apparatus and a method for determining coordinates of an icon on a display screen of a mobile communication terminal, which can easily and accurately determine the coordinates of a focused icon on the display screen of the mobile communication terminal.

### 2. Description of the Related Art

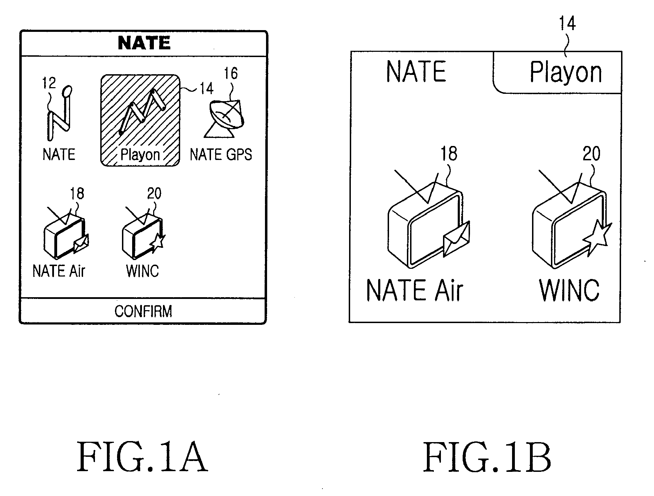

FIGS. 1A and 1B are views illustrating a display screen of a mobile communication terminal according to the prior art. FIG. 1A shows a focused icon on a display screen of a mobile communication terminal, and FIG. 1B shows the focused icon with its size enlarged to fill the whole screen.

In FIG. 1A, five icons appear on the display screen: "NATE" 12, "Playon" 14, "NATE GPS" 16, "NATE Air" 18, and "WINC" 20. Among them, the focused icon is "Playon" 14. Unlike other icons, "Playon" 14 has a colored background. Icon focusing refers to a display of a specified icon selected through a user input and the like with a background color different from those of other icons, or a display of a selected icon in a manner different from unselected icons.

On the other hand, the mobile communication terminal can display the focused icon with an enlarged size. FIG. 1B shows a focused icon of FIG. 1A displayed with its size enlarged to fill the whole screen.

However, in the display screen of FIG. 1B, since the coordinates of the focused icon, i.e. Playon 14, are not accurately determined, Playon 14 is not displayed with its size enlarged. Rather, a part of the display screen, which corresponds to a part having coordinates that are not the coordinates of "Playon" 14, is displayed with its size enlarged. This occurs because the coordinates on the display screen for determining the size and shape of the focused icon are not accurately determined when the mobile communication terminal enlarges the focused icon.

Particularly, in the case where the mobile communication terminal receives a request for enlargement of the focused icon while the focus of the icon has been shifted, it should still perform the enlargement command even though the coordinate value of the focused icon has not been determined. Accordingly, another icon, which is not the icon to be enlarged, or any thing that is not part of the icon is displayed on the display screen with its size enlarged. Accordingly, there is a need for an apparatus and method that can easily and accurately determine the coordinates of a focused icon on the icon selection screen of the mobile communication terminal.

### SUMMARY OF THE INVENTION

Accordingly, the present invention has been designed to solve the above and other problems occurring in the prior art, and provides an apparatus and a method for determining coordinates of an icon on a display screen of a mobile communication terminal, which can accurately determine the coordinates of a focused icon on the display screen of the mobile communication terminal.

In order to accomplish the above object, there is provided an apparatus for determining coordinates of a focused icon on an icon selection screen displaying at least one icon in a mobile communication terminal, according to the present invention, which includes a display unit displaying the icon selection screen including the at least one icon and icon regions including icons; a focusing determination unit determining a background color of the icon selection screen based on a current hue value for each pixel of the icon selection screen, comparing the current hue value for each pixel with a previous hue value for each pixel pre-stored, determining a focus color and a focus region of a focused icon region by checking pixels having changed hue values in accordance with the result of comparison, and calculating center coordinates of the determined focus region; and a control unit judging whether a difference between the current hue value and the previous hue value is 0 in accordance with the result of comparison of the current hue value and the previous hue value, and determining the pixels having a comparison result other than 0as the pixels having the changed hue values.

In another aspect of the present invention, there is provided a method of determining coordinates of a focus-shifted icon on an icon selection screen displaying at least one icon in a mobile communication terminal, which includes a selection screen display step of displaying the icon selection screen including the at least one icon and icon regions including icons; a background color determination step of determining a background color of the icon selection screen based on a current hue value for each pixel of the icon selection screen; a focus region determination step of comparing the current hue value for each pixel with a previous hue value for each pixel pre-stored, and determining a focus color and a focus region of a focused icon region by checking pixels having changed hue values in accordance with the result of comparison; and a center coordinate determination step of determining center coordinates of the determined focus region.

### BRIEF DESCRIPTION OF THE DRAWINGS

The above and other objects, features and advantages of the present invention will be more apparent from the following detailed description taken in conjunction with the accompanying drawings, in which:
FIGS. 1A and 1B are views illustrating a display screen of a mobile communication terminal according to the prior art;
FIG. 2 is a block diagram illustrating the schematic configuration of a mobile communication terminal for determining the coordinates of a focused icon according to a preferred embodiment of the present invention;
FIG. 3 is a flowchart illustrating a method of determining the coordinates of a focused icon according to a preferred embodiment of the present invention;
FIG. 4 is a flowchart illustrating a method of determining a background color of an icon selection screen in order to calculate the coordinates of a focused icon according to a preferred embodiment of the present invention;
FIG. 5 is a view illustrating an icon selection screen divided into four quarters according to a preferred embodiment of the present invention;
FIG. 6 is a flowchart illustrating a method of determining a focus color in order to calculate the coordinates of a focused icon on an icon selection screen according to a preferred embodiment of the present invention;
FIG. 7 is a flowchart illustrating a method of determining a focus region in order to calculate the coordinates of a focused icon according to a preferred embodiment of the present invention;
FIGS. 8A and 8B are views illustrating an icon selection screen including a focus-shifted icon region according to a preferred embodiment of the present invention; and
FIGS. 9A and 9B are views illustrating a method of displaying an enlarged icon region of which the center coordinates are determined according to a preferred embodiment of the present invention.

### DETAILED DESCRIPTION OF THE PREFERRED EMBODIMENTS

Preferred embodiments of the present invention will be described in detail hereinafter with reference to the accompanying drawings. In the following description of the present invention, only parts necessary for understanding the operation of the present invention will be explained. A detailed description of known functions and configurations incorporated herein will be omitted when it may obscure the subject matter of the present invention.

Hereinafter, an image that is displayed in association with a specified command on a display screen of a mobile communication terminal is called an "icon". The term "focusing" means to display an icon selected by a user input and distinguishes non-selected icons on an icon selection screen. The term "icon region" means an icon and a background surrounding the icon in a specified range, and in a preferred embodiment of the present invention, it is assumed that the icon region is in the form of a rectangle. "Focusing" can be applied to not only an icon, but also the icon region, and means a change of a background color surrounding the icon in the icon region.

A display screen displaying at least one icon in order for a mobile communication terminal to receive a selection of an icon through a user input is referred to as an "icon selection screen". Also, "focus color" means a color of an icon region except for an icon in a focused icon region; and "focus region" means a focused icon region including an icon. The remaining region except for the icon region on the icon selection screen is referred to as a "background region".

A value indicating a color, such as a background color, a focus color, or the like, is referred to as a hue value. In a preferred embodiment of the present invention as described hereinafter, the hue value will be described using RGB (Red, Green, Blue) values. Other examples of hue value may be CMYK (Cyan, Magenta, Yellow, Black) and the like.

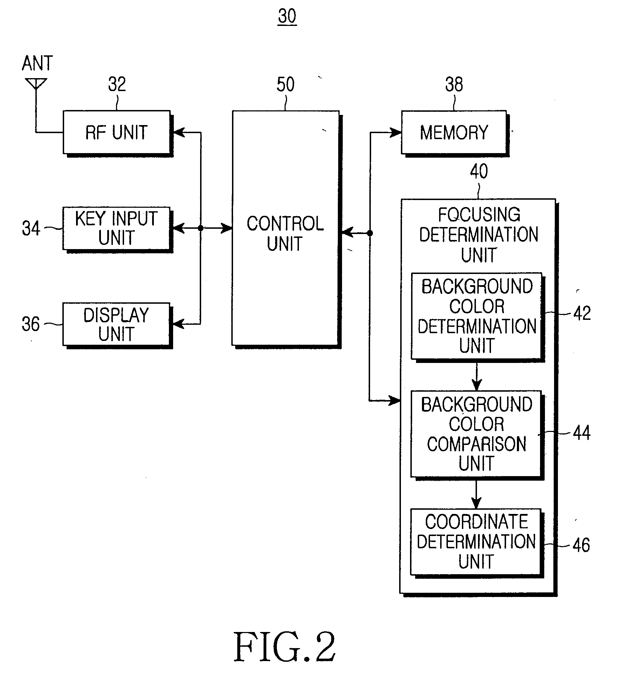

FIG. 2 is a block diagram illustrating a schematic configuration of a mobile communication terminal for determining coordinates of a focused icon according to a preferred embodiment of the present invention.

Referring to FIG. 2, the mobile communication terminal 30 includes Radio Frequency (RF) unit 32, a key input unit 34, a display unit 36, a memory 38, a focusing determination unit 40, and a control unit 50.

The RF unit 32 performs a wireless communication function of the mobile communication terminal 30. The RF unit 32 includes an RF transmitter (not illustrated) up-converting and amplifying a baseband signal, and an RF receiver (not illustrated) low-noise-amplifying the received signal and down-converting the received signal.

The key input unit 34 is provided with keys for inputting numerals and characters and keys for setting various functions, and receives a user input.

In an embodiment of the present invention, the key input unit 34 is provided with, for example, a direction key for moving up, down, left, and right, and receives a direction input for selecting an icon and an icon region from the user. In the case where respective icon regions of an icon selection screen correspond to numeral keys of the key input unit, a user's numeral key input is received and an icon region corresponding to the input numeral key is selected. Also, the key input unit receives a user input of whether to display the focused icon region with its size enlarged or reduced.

The display unit 36 includes an LCD and the like, and outputs various kinds of display data generated from the mobile communication terminal 30. In the case of using a touch screen type LCD, the display unit 36 operates as an input means.

The display unit 36 displays a focused icon region and an unfocused region in different display ways under the control of the control unit 50. For example, if it is assumed that the color of the background region is white, the color of the remaining region except for the icon in the focused icon region is blue, and the color of the remaining region except for the icon in the unfocused icon region is white, that is the same color as the background region.

Also, the display unit 36 displays the focused icon region, i.e. the focus region, with its size enlarged or reduced. The display unit 36 enlarges the focus region at a specified magnification rate based on the center coordinates of the focus region under the control of the control unit 50, and displays the enlarged focus region on the display screen. The magnification rate of the focused icon region may be pre-stored in the memory 38 to be described later, or may be set by the user input through the key input unit 34.

The memory 38 may be a program memory or data memory. In the memory 38, various information required to control the operation of the mobile communication terminal 30 is stored.

In a preferred embodiment of the present invention, the memory 38 stores therein coordinates of the boundary surfaces that form the shape of the respective icon regions being displayed on the icon selection screen by the display unit 36. For example, if the icon region is in the form of a rectangle, the memory 38 stores the coordinates of four vertices of the icon region. At this time, the memory 38 may store both the coordinates of vertices of the icon region in the case where the respective icon region is focused on and the coordinates of vertices of the icon region in the case where the respective icon region is not focused on. Also, the memory 38 stores the center coordinates of the focus region determined by the focusing determination unit 40 to be described later.

The focusing determination unit 40 determines the center coordinates of the focused icon region. For this purpose, the focusing determination unit 40 includes a background color determination unit 42, a background color comparison unit 44, and a coordinate determination unit 46.

The background color determination unit 42 determines the background color of the icon selection screen. The background color determination unit 42, under the control of the control unit 50, divides the icon selection screen into four quarters, and determines the RGB values of colors by pixels. The background color determination unit 42, under the control of the control unit 50, counts the number of pixels having the same RGB value by quarters of the icon selection screen, and stores the counted value in the memory 38.

The background color determination unit 42 determines colors commonly distributed in the quarters among the colors stored by the RGB values according to the respective pixels. The background color is determined among the common colors in a manner that the number of pixels is counted for each RGB value in respective quarters; the counted values calculated for the respective quarters are added; and the RGB value having the largest added value is determined as the background color. That is, the background color is a color commonly distributed in the quarters, and is determined as the color corresponding to the largest number of counted pixels in all the quarters.

The background color determination unit 42 according to the preferred embodiment of the present invention, under the control of the control unit 50, stores the RGB values of the colors by pixels of the quarters for a predetermined period, and counts and stores the number of pixels by RGB values in the memory 38. In order to distinguish the RGB values by pixels determined for the period, the RGB value determined in a previous period is referred to as a previous RGB value, and the RGB value determined in the current period is referred to as a current RGB value. The background color determination unit 42, under the control of the control unit 50, stores the RGB values by pixels in the memory 38, corresponding to the respective pixels, and the period for determining the RGB values by pixels may be a value pre-stored in the memory 38.

The background color comparison unit 44 compares the current RGB value by pixels determined in the respective icon regions with the previous RGB value pre-stored in the memory 38. For this purpose, the background color comparison unit 44 obtains the difference between the current RGB value and the previous RGB value by pixels. It determines that if the difference between the current RGB value and the previous RGB value is 0, the color of the corresponding pixel has not been changed; while if the difference is not 0, the color of the corresponding pixel has been changed.

In another preferred embodiment of the present invention, if the difference between the current RGB value and the previous RGB value is not 0, but a value within a predetermined range, the color of the corresponding pixel has not been changed. For example, if the previous hexadecimal RGB value is "FFFFFF" and the current hexadecimal RGB value is "FFFFCD", the user may not grasp the color change of the corresponding pixel although the corresponding pixel is displayed on the icon selection screen. Accordingly, if the difference between the current RGB value and the previous RGB value is a value within the predetermined range even though it is not 0, the background color comparison unit 44 considers that the color of the corresponding pixel has not been changed, and determines the focus color and the focus region accordingly.

Also, the background color comparison unit 44, under the control of the control unit 50, does not calculate the difference between the current RGB value and the previous RGB value for the respective pixels included in the background region on the icon selection screen. In a preferred embodiment of the present invention, all the pixels included in the background region of the icon selection screen have the RGB value of the background color, and the background color of the background region is not changed, even though the focusing of the icon region is changed. Accordingly, the background color comparison unit 44 obtains the difference between the current RGB value and the previous RGB value with respect to the icon regions except for the background region on the icon selection screen.

Also, the background color comparison unit 44, under the control of the control unit 50, determines the focus color and the focus region by checking the pixels having the changed RGB values. For this purpose, the background color comparison unit 44, under the control of the control unit 50, obtains the difference between the current RGB value of the pixels having the changed RGB value and the RGB value of the background color. When the difference between the current RGB value and the RGB value of the background color is 0, the corresponding pixels are pixels of which the RGB value has been changed to the background color and of which the previous RGB value is the focus color.

In order to determine the focus region, the background color comparison unit 44, under the control of the control unit 50, obtains the difference between the current RGB value of the pixels having the changed RGB value and the RGB value of the focus color. When the difference between the current RGB value and the RGB value of the focus is 0, the current RGB value is the focus color, and the icon region including the pixels becomes the focus region.

The coordinate determination unit 46 determines the center coordinates of the focus region which is also the focused icon region, under the control of the control unit 50. The coordinate determination unit 46 calculates the center coordinates using the coordinates of the vertices constituting the icon region or the focus region pre-stored in the memory 38.

In the same manner as the icon region, the center coordinates are determined as a position in which both the width and length of the focus region in the form of a rectangle can be divided into two equal parts. For example, if X>x and Y>y, and the coordinates of four vertices constituting the focus region are (x, y), (X, y), (x, Y), and (X, Y), the center coordinates become ((X-x)/2, (Y-y)/2).

The control unit 50 controls the whole operation of the mobile communication terminal 30.

In a preferred embodiment of the present invention, the control unit 50 judges the common colors of the quarters based on the number of pixels counted by RGB values that are determined by the background color determination unit 42 in the respective quarters. Also, the control unit 50 determines the common color most distributed over all the quarters among the common colors determined through the background color determination unit 42 as the background color.

The control unit 50 obtains the difference between the current RGB value and the previous RGB value by pixels of the icon regions through the background color comparison unit 44, and judges the pixels having the changed RGB value using the difference between the current RGB value and the previous RGB value by pixels. Also, the control unit obtains the different between the current RGB value of the pixels having the changed RGB value and the RGB value of the background color through the background color comparison unit 44, and determines the focus color.

The control unit 50 controls the background color comparison unit 44 to obtain the difference between the current RGB value of the pixels having the changed RGB value and the RGB value of the focus color to determine the focus region. The icon region, including the pixels, in which the difference between the current RGB value and the RGB value of the focus color is 0, is determined as the focus region. The control unit 50 receives the user input through the key input unit 34, and may control the display unit 36 to display the focus region with its size enlarged to the whole display screen.

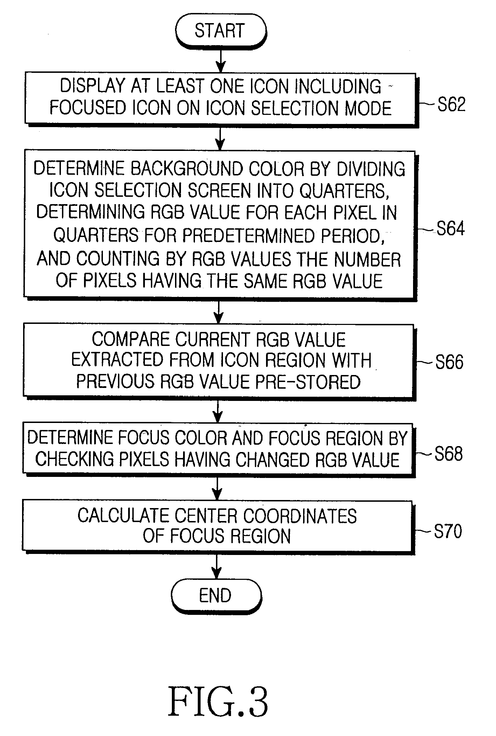

FIG. 3 is a flowchart illustrating a method of determining coordinates of a focused icon according to a preferred embodiment of the present invention.

Referring to FIG. 3, the display unit 36 displays at least one icon including a focused icon on the display screen in step S62. As described above, the screen on which icons are displayed is called an icon selection screen.

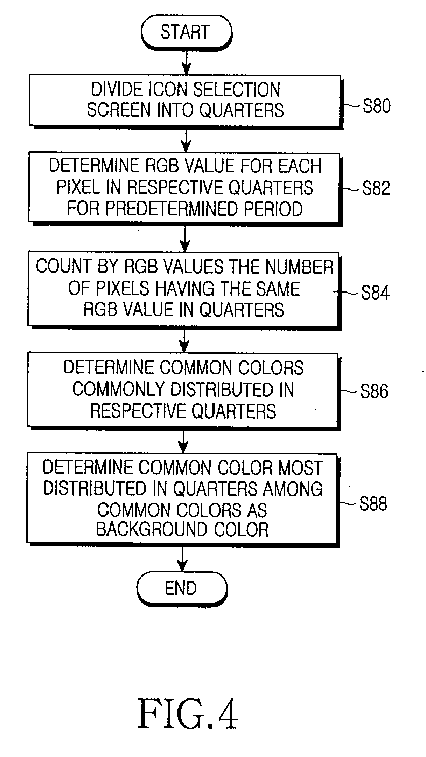

The background color determination unit 42 of the focusing determination unit 40 divides the icon selection screen into four quarters, determines the RGB value for each pixel of the respective quarters for the predetermined period, and determines the background color by counting, by RGB values, the number of pixels having the same RGB value in step S64. The background color determination unit 42, under the control of the control unit 50, determines the RGB value by pixels of the respective quarters for the predetermined period, and stores the determined RGB values in the memory 38. The detailed description will be made with reference to FIG. 4.

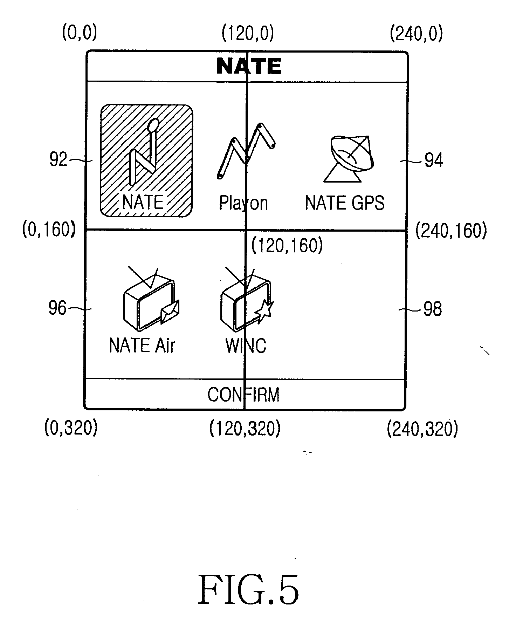

The background color comparison unit 44 compares the current RGB value determined in the respective icon regions with the previous RGB value pre-stored in step S66, and determines the focus color and the focus region by checking the pixels having the changed RGB value in step S68. The detailed description will be made with reference to FIG. 5.

The coordinate determination unit 46 calculates the center coordinates of the determined focus region in step S70. The control unit 50 controls the display unit 36 to display the focus region including the icon on the icon selection screen with its size enlarged at a specified magnification.

FIG. 4 is a flowchart illustrating a method of determining a background color of an icon selection screen in order to calculate coordinates of a focused icon according to a preferred embodiment of the present invention.

Referring to FIG. 4, the background color determination unit 42 divides the icon selection screen into four quarters. It is preferable that the quarters have the same area. In an embodiment of the present invention, a display screen composed of 240x320 pixels is used. In step S80, the background color determination unit 42 divides the icon selection screen into quarters each composed of 120×160 pixels. The icon selection screen is divided into, for example, a first quarter, a second quarter, a third quarter, and a fourth quarter.

The background color determination unit 42 determines the RGB values by pixels of the respective quarters for a predetermined period in step S82. The background color determination unit 42 stores the respective pixel coordinates and RGB values of the corresponding pixels in the memory 38 for the predetermined period. In an embodiment of the present invention, the memory 38 stores both the previous RGB values and the current RGB values by pixels.

The background color determination unit 42 counts, by RGB values, the number of pixels having the same RGB value in accordance with the RGB values determined in the first to fourth quarters in step S84. The background color determination unit 42 determines common colors commonly distributed in the first to fourth quarters in step S86. A color distributed in all four quarters is called a common color.

The common color and the background color will be described in detail with reference to Table 1 as follows.

**Table 1**

| | First Quarter | Second Quarter | Third Quarter | Fourth Quarter |
|---|---|---|---|---|
| 000000 | 600 | 200 | 200 | 100 |
| 0000FF | 7200 | 600 | 1200 | 1200 |
| 008000 | 100 | 100 | 0 | 0 |
| 808080 | 0 | 100 | 150 | 100 |
| FF0000 | 0 | 150 | 0 | 0 |
| FFA500 | 0 | 250 | 450 | 450 |
| FFFFFF | 360 | 9000 | 9000 | 12500 |

Table 1 shows counted values of the current RGB values determined by pixels for the respective quarters. That is, numerals indicated in Table 1 represent the number of pixels having the respective RGB values for the respective quarters. For example, the number of pixels having the RGB value of "000000" is 600 in the first quarter, 200 in the second quarter, 200 in third quarter, and 100 in the fourth quarter. Also, the counted value of the RGB value of "000000" is 600 in the first quarter, 200 in the second quarter, 200 in the third quarter, and 100 in the fourth quarter.

Referring to Table 1, it can be seen that common colors are "000000", "0000FF", and "FFFFFF" appearing in all four quarters. The background color determination unit 42 determines "000000", "0000FF", and "FFFFFF" as common colors, since "008000", "808080", "FF0000", and "FFA500" are colors that are not distributed in any one of the four quarters, and thus cannot be common colors.

The control unit 50 determines the common color having the RGB value corresponding to the largest number of pixels in the first to fourth quarters among the common colors in step S88. In step S88, the control unit 50 determines the common color among the common colors "000000", "0000FF", and "FFFFFF" distributed in all four quarters as the possible background colors.

If it is assumed that the final count is obtained by adding up all the counted values by RGB values in the first to fourth quarters, the final count of "000000" in Table 1 is "600+200+200+100=1100, the final count of "0000FF" is "7200+600+1200+1200=10200, and the final count of "FFFFFF" is "360+9000+9000+12500=30860. Accordingly, the control unit 50 determines "FFFFFF" as having the largest count value as the background color.

As described above, the region indicated as the background color on the icon selection screen except for the icon region is called a background region.

FIG. 5 is a view illustrating an icon selection screen divided into four quarters according to a preferred embodiment of the present invention.

Referring to FIG. 5, it is assumed that the display screen for displaying the icon selection screen has a size of 240x320 pixels. Also, it is assumed that the left uppermost point of the display screen is the original point (0, 0), and the coordinate value for each pixel increases by 1.

The first quarter 92 is defined by the coordinates (0, 0), (120, 0), (0, 160), and (120, 160), the second quarter 94 is defined by the coordinates (120, 0), (240, 0), (120, 160), and (240, 160), the third quarter 96 is defined by the coordinates (0, 160), (120, 160), (0, 320), and (120, 320), and the fourth quarter 98 is defined by the coordinates (120, 160), (240, 160), (120, 320), and (240, 320).

In FIG. 5, an icon region positioned in the first quarter 92 is focused on. The background color determination unit 42 determines the current RGB value for each pixel on the divided icon selection screens, and counts the number of pixels having the same RGB value in accordance with the determined RGB values. In FIG. 5, it is assumed that the common colors are blue, black, and white. The RGB value of blue is "0000FF", the RGB value of Black is "000000", and the RGB value of white is "FFFFFF".

The background color determination unit 42 counts the pixels having the RGB value of "0000FF", the pixels having the RGB value of "000000" and the pixels having the RGB value of "FFFFFF" in the quarters, and the control unit 50 determines the background color by comparing the counted values for the respective RGB values. It is assumed that Table 1 reflects the current RGB values of FIG. 5.

In the first quarter 92 of the icon selection screen of FIG. 5, the number of pixels having the RGB value of "0000FF" and the number of pixels having the RGB value of "000000" are larger than the number of pixels having the RGB value of "FFFFFF". However, since the common color having the largest final count including the second to fourth quarters 94, 96, and 98 is determined as the background color, the control unit 50 determines "FFFFFF" as the background color. Also, the control unit 50 stores the RGB value of "FFFFFF" in the memory 38 as the background color, and stores the region having the RGB value of "FFFFFF" in the remaining region, except for the icon region, as a background region.

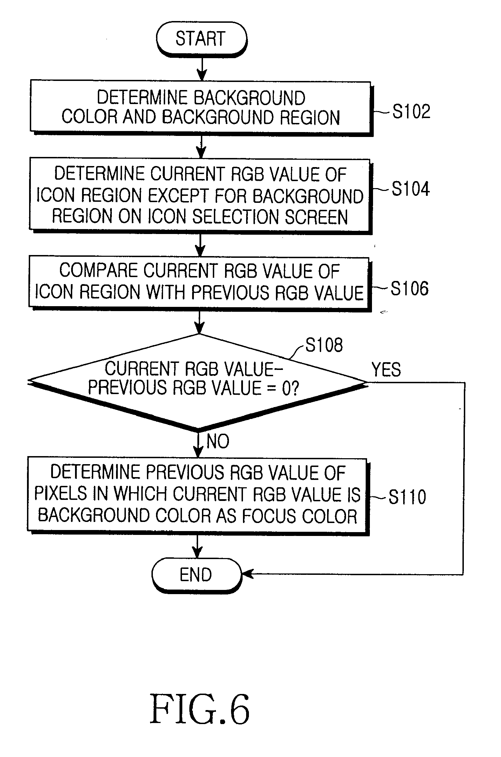

FIG. 6 is a flowchart illustrating a method of determining a focus color in order to calculate coordinates of a focused icon on an icon selection screen according to a preferred embodiment of the present invention.

Referring to FIG. 6, the background color determination unit 42 of the focusing determination unit 40, under the control of the control unit 50, determines the background color and the background region in step S102. The background color determination unit 42 divides the icon selection screen into four quarters, and stores colors for each pixel determined for a predetermined period in the quarters in the memory 38 by RGB values. The background color determination unit 44 determines the current RGB value for each pixel of the icon region, except for the background region, on the icon selection screen in step S104.

The background color comparison unit 44 compares the current RGB value for each pixel of the icon region determined by the background color determination unit 42 with the previous RGB value pre-stored in step S106.

Based on the result of the comparison in step S106, the control unit 50 judges whether a difference between the current RGB value and the previous RGB value is 0 in step S108. If the difference between the current RGB value and the previous RGB value is 0, it means that the RGB value of the corresponding pixel has not been changed in the predetermined period. By contrast, if the difference between the current RGB value and the previous RGB value is not 0, it means that the RGB value of the corresponding pixel has been changed.

Accordingly, if the difference between the current RGB value and the previous RGB value is 0, the control unit 50 does not perform a separate operation and stops its operation.

If the difference between the current RGB value and the previous RGB value is not 0 as a result of comparison in step S108, it means that the RGB value of the pixels has been changed.

In a preferred embodiment of the present invention, the color of the icon itself is not changed, but the color of the remaining region except for the icon is changed in accordance with the focusing state. Also, the remaining region except for the icon is processed as a background color when it is not focused on, while it is processed as a focus color when it is focused on. Accordingly, the region determined in step S108 may be a region in which the previous RGB value is the focus color, or a region in which the current RGB value is the focus color.

The control unit 50 determines the previous RGB value of the pixels, in which the current RGB value is the background color, as the focus color in step S110. The icon region including the pixels, in which the current RGB value has been changed to the background color, is in a focused state when the previous RGB value is determined.

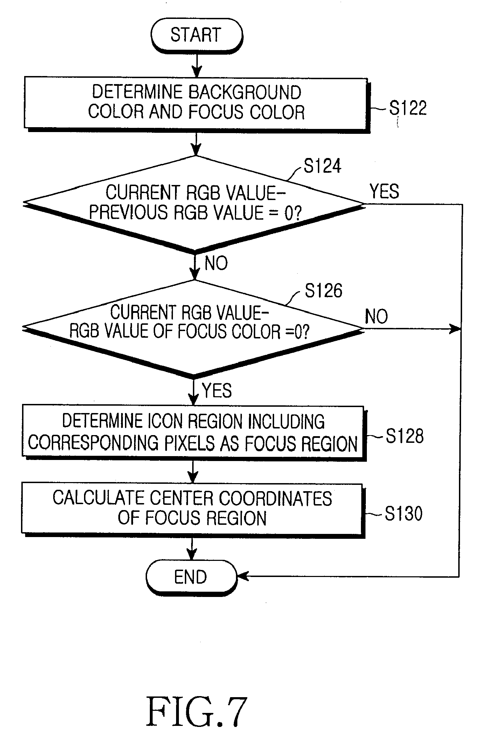

FIG. 7 is a flowchart illustrating a method of determining a focus region in order to calculate coordinates of a focused icon according to a preferred embodiment of the present invention.

Referring to FIG. 7, the control unit 50 determines the background color and the focus color of the icon selection screen in step S122. The control unit 50 determines whether the difference between the current RGB value for each pixel and the previous RGB value is 0 in the icon regions in step S124. As described above with reference to FIG. 6, if the difference between the current RGB value and the previous RGB value is not 0 in the icon regions, the corresponding pixels correspond to a region in which either the previous RGB value is the focus color, or a region in which the current RGB value is the focus color.

If the difference between the current RGB value and the previous value is 0, it means that the current RGB value and the previous RGB value do not refer to the focus region, but refer to the same icon region, and thus the control unit 50 does not perform any further operation.

If the difference between the current RGB value and the previous value is not 0, the control unit 50 determines whether a difference between the current RGB value of the corresponding pixels and the RGB value of the focus color is 0 in step S126.

If the difference between the current RGB value of the corresponding pixels and the RGB value of the focus color is not 0 as a result of the determination in step S126, it means that the corresponding pixels do not refer to the focus region having the RGB value of the focus color, and thus the control unit 50 does not perform any further operation.

If the difference between the current RGB value and the RGB value of the focus color is 0 as a result of the determination in step S126, the control unit 50 determines the icon region including the corresponding pixels as the focus region in step S128. If the focus region is determined, the coordinate determination unit 46 calculates the center coordinates of the icon region that is the focus region in step S130.

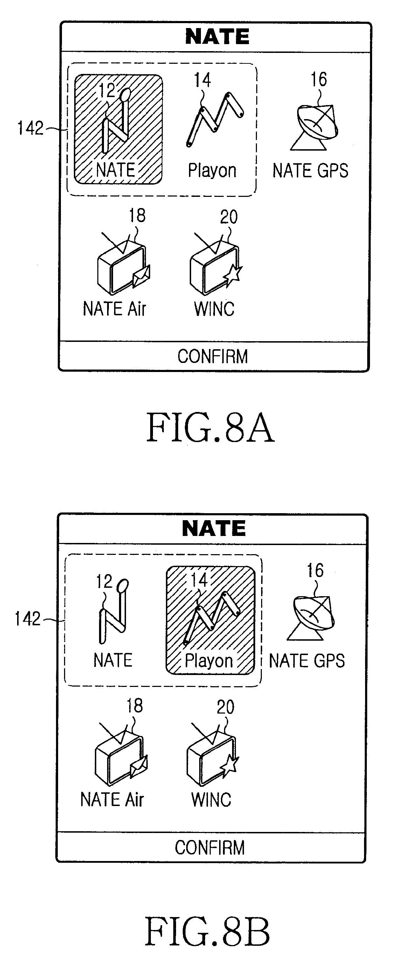

FIGs. 8A and 8B are views illustrating an icon selection screen including a focus-shifted icon region according to a preferred embodiment of the present invention.

In FIGs. 8A and 8B, it is assumed that the RGB value of the background color is "FFFFFF", and the RGB value of the focus color is "0000FF". FIG. 8A shows an icon selection screen on which NATE 12 is focused among the icons, and FIG. 8B shows an icon selection screen on which "Playon" 14 is focused among the icons. That is, FIGs. 8A and 8B show the icon selection screen on which the focused icon is shifted from "NATE" 12 to "Playon" 14. As such, the RGB value for each pixel determined as shown in FIG. 8A is referred to as the previous RGB value, and the RGB value for each pixel determined as shown in FIG. 8B is referred to as the current RGB value.

Using the difference between the current RGB value of FIG. 8B and the previous RGB value of FIG. 8A, the region 142 in which the RGB value has been changed can be determined on the icon selection screen except for the background region. Since "NATE" 12 is focused on and then "Playon" 14 is focused on among the icons, the icon region including "NATE" 12 and "Playon" 14 is determined as the region 142 in which the RGB value has been changed.

The control unit 50 controls the background color comparison unit 44 to determine the focus color from the icon region of "NATE" 12, and determines the icon region of "Playon" 14 as the focus region that is currently focused on using the difference between the current RGB value and the RGB value of the focus color.

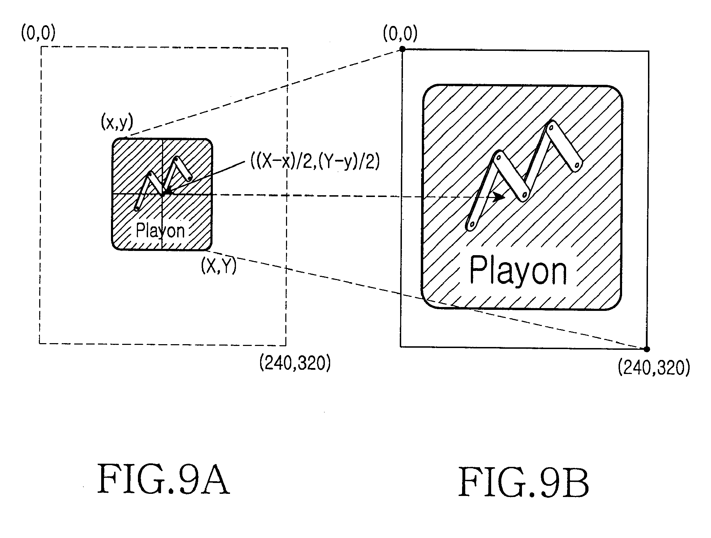

FIGs. 9A and 9B are views illustrating a method of displaying an enlarged icon region of which the center coordinates of the focus region are determined according to a preferred embodiment of the present invention. FIG. 9A refers to the obtaining of the center coordinates of the focus region.

The control unit 50 controls the coordinate determination unit 46 to determine the center coordinates of the focus region. As shown in FIG. 9A, the coordinates of the icon region required to obtain the center coordinates are (x, y) and (X, Y). The center coordinates calculated by the coordinate determination unit 46 are ((X-x)/2, (Y-y)/2). In this case, (x, y) and (X, Y) are values pre-stored in the memory 38, and indicate the coordinate values when the icon region is focused on.

In a preferred embodiment of the present invention, the coordinates of the icon regions required to obtain the center coordinates may differ depending on whether the icon region is focused on. That is, the display unit 36, under the control of the control unit 50, can display the focused icon region with its size enlarged or reduced. It is apparent that the center coordinates of the focused icon region that is displayed on the icon selection screen with its size enlarged or reduced have values different from those of the center coordinates of the unfocused icon regions.

FIG. 9B refers to the enlargement of the focused icon region to the whole display screen size. In FIG. 9B, it is assumed that the display screen has a size of 240x320 pixels.

The display unit 36, under the control of the control unit 50, enlarges and displays the focus region based on the two coordinates of the focus region (x, y), (X, Y) and ((X-x)/2, (Y-y)/2). As the focus region is enlarged to fill the whole screen, the control unit 50 controls the display unit 36 to display the enlarged focus region so that (x, y) of FIG. 9A corresponds to (0, 0) of FIG. 9B, and (X, Y) corresponds to (240, 320).

As described above, according to the apparatus for determining coordinates of an icon on a display screen of a mobile communication terminal and the method thereof according to the present invention, the coordinates of a focused icon can be accurately determined on the display screen of the mobile communication terminal. Also, according to the present invention, the icon can be displayed with its size enlarged or reduced based on the center coordinates of the determined focus region.

While the present invention has been shown and described with reference to certain preferred embodiments thereof, it will be understood by those skilled in the art that various changes in form and details may be made therein without departing from the spirit and scope of the present invention as defined by the appended claims.

## Claims

1. An apparatus for determining coordinates of a focused icon on an icon selection screen displaying at least one icon in a mobile communication terminal comprising:
a display unit displaying the icon selection screen including the at least one icon and icon regions including icons;
a focusing determination unit determining a background color of the icon selection screen based on a current hue value for each pixel of the icon selection screen, comparing the current hue value for each pixel with a previous hue value for each pixel pre-stored, determining a focus color and a focus region of a focused icon region by checking pixels having changed hue values in accordance with the result of comparison, and calculating center coordinates of the determined focus region; and
a control unit determining whether a difference between the current hue value and the previous hue value is 0 in accordance with the result of comparison of the current hue value and the previous hue value, and determining the pixels having a comparison result other than 0 as the pixels having the changed hue values.

2. The apparatus as claimed in claim 1, further comprising a memory storing the previous hue value and the current hue value.

3. The apparatus as claimed in one of claims 1 to 2, wherein the hue value refers to RGB (Red, Green, Blue).

4. The apparatus as claimed in one of claims 1 to 3, wherein the focusing determination unit comprises:
a background color determination unit dividing the icon selection screen into four parts, determining the current hue value for each pixel of the divided icon selection screen for a predetermined period, and determining the background color commonly distributed on the divided icon selection screens by counting by hue values the number of pixels having the same current hue value;
a background color comparison unit comparing the current hue value for each pixel determined on the respective icon regions with the previous hue value for each pixel pre-stored, and determining the focus color and the focus region by checking the pixels in which the difference between the current hue value and the previous hue value for each pixel is not 0 in accordance with the result of comparison; and
a coordinate determination unit determining center coordinates of the determined focus region.

5. The apparatus as claimed in claim 4, wherein the background color determination unit determines the current hue value for each pixel of the divided icon selection screen, and determines the common colors commonly distributed on the divided icon selection screen by counting by hue values the number of pixels having the same current hue value; and
wherein the control unit controls the focusing determination unit to determine the common color having a largest number of pixels counted by RGB values on the icon selection screen among the determined common colors as the background color.

6. The apparatus as claimed in one of claims 4 to 5, wherein the background color comparison unit obtains a difference between the current hue value for each pixel of the icon regions and the previous hue value; and
wherein the control unit determines whether the difference between the current hue value and the previous hue value is 0, and controls the background color comparison unit to determine the previous hue value of the pixels in which the current hue value coincides with the hue value of the background color among the pixels in which the difference between the current hue value and the previous hue value is not 0 as the focus color.

7. The apparatus as claimed in claim 6, wherein the background color comparison unit obtains the difference between the current hue value of the pixels in which the difference between the current hue value and the previous hue value is not 0 and the hue value of the background color to output the obtained difference to the control unit; and
wherein the control unit determines whether the difference between the current hue value and the hue value of the background color is 0, and controls the background color comparison unit to determine the previous hue value of the pixels in which the difference between the current hue value and the hue value of the background color is 0 as the focus color.

8. The apparatus as claimed in claim 7, wherein the background color comparison unit obtains the difference between the current hue value of the pixels in which the difference between the current hue value and the previous hue value is not 0, and the hue value of the focus color to output the obtained difference to the control unit; and
wherein the control unit determines whether the difference between the outputted current hue value and the hue value of the focus color is 0, and controls the background color comparison unit to determine the icon region including the pixels in which the difference between the current hue value and the hue value of the focus color is 0 as the focus region.

9. The apparatus as claimed in one of claims 1 to 8, wherein the display unit displays the focus region with its size enlarged or reduced, based on the center coordinates of the determined focus region.

10. A method of determining coordinates of a focus-shifted icon on an icon selection screen displaying at least one icon in a mobile communication terminal comprising:
displaying the icon selection screen including the at least one icon and icon regions including icons;
determining a background color of the icon selection screen based on a current hue value for each pixel of the icon selection screen;
comparing the current hue value for each pixel with a previous hue value for each pixel pre-stored, and determining a focus color and a focus region of a focused icon region by checking pixels having changed hue values in accordance with the result of comparison; and
determining center coordinates of the determined focus region.

11. The method as claimed in claim 10, further comprising storing the previous hue value and the current hue value.

12. The method as claimed in one of claims 10 to 11, wherein the hue value refers to RGB (Red, Green, Blue).

13. The method as claimed in one of claims 10 to 12, further comprising displaying the focus region with its size enlarged or reduced, based on the center coordinates of the determined focus region.

14. The method as claimed in claim 13, wherein the background color determination step comprises:
dividing the icon selection screen into four parts;
determining the current hue value for each pixel of the divided icon selection screen for a predetermined period;
determining common colors distributed on the divided icon selection screens by counting by hue values the number of pixels having the same current hue value; and
determining the common color having the largest number of pixels counted by hue values on the icon selection screen among the common colors as the background color.

15. The method as claimed in claim 14, wherein the focus region determination step comprises:
calculating a difference between the current hue value for each pixel of the icon regions and the previous hue value;
calculating a difference between the current hue value of the pixels in which the difference between the current hue value and the previous hue value is not 0 and the hue value of the background color;
determining whether the difference between the current hue value and the hue value of the background color is 0, and determining the previous hue value of the pixels in which the difference between the current hue value and the hue value of the background color is 0 as the focus color;
obtaining a difference between the current hue value of the pixels in which the difference between the current hue value and the previous hue value is not 0 and the hue value of the focus color; and
determining whether the difference between the current hue value and the hue value of the focus color is 0, and determining the icon region including the pixels in which the difference between the current hue value and the hue value of the focus color is 0 as the focus region.
